# EUROPÄISCHE PATENTSCHRIFT

(11) **EP 2 005 697 B1**
(45) Veröffentlichungstag und Bekanntmachung des Hinweises auf die Patenterteilung: **29.01.2014**
(21) Anmeldenummer: 07723966.3
(22) Anmeldetag: 04.04.2007
(51) Int. Cl.: H04L 29/06, H04L 29/08, H04W 60/04, H04W 80/10

(54) **NETZWERK-INITIIERTE IMS REGISTRIERUNG IN EINEM KOMMUNIKATIONSSYSTEM**
NETWORK-INITIATED IMS REGISTRATION IN A COMMUNICATION SYSTEM
ENREGISTREMENT IMS INITIÉ PAR RÉSEAU DANS UN SYSTÈME DE COMMUNICATION

(30) Priorität: 06.04.2006 DE 102006016565
(43) Veröffentlichungstag der Anmeldung: 24.12.2008
(73) Patentinhaber: Deutsche Telekom AG, 53113 Bonn (DE)
(72) Erfinder: BISCHINGER, Kurt, 1140 Wien (AT); HECHTWARTNER, Roland, 1140 Wien (AT)
(74) Vertreter: Riebling, Peter
(86) Internationale Anmeldenummer: PCT/EP2007/003025
(87) Internationale Veröffentlichungsnummer: WO 2007/115754

(56) Entgegenhaltungen:
- EP-A- 1 555 838
- EP-A- 1 571 864
- US-A1- 2004 243 680
- "Universal Mobile Telecommunications System (UMTS)" ETSI STANDARDS, EUROPEAN TELECOMMUNICATIONS STANDARDS INSTITUTE, SOPHIA-ANTIPO, FR, Bd. 3-SA2, Nr. V610, Juni 2004 (2004-06), Seiten 1-35, XP014027162 ISSN: 0000-0001

## Beschreibung

### Gebiet der Erfindung

Die Erfindung betrifft eine Verfahren und ein System zur Netzwerk-initiierten IMS Registrierung eines Kommunikationsendgeräts in einen Kommunikationssystem.

### Stand der Technik

Das IMS - IP Multimedia Core Network Subsystem [3GPP TS22.228] ist eine zentrale Integrationsplattformen für die Steuerung von Mobilfunkdiensten, die Kundenverwaltung und die Gebührenabrechung für Mobilfunkdienste, die auf dem IP-Protokoll aufsetzen. Das IMS-Konzept wird von 3GPP (3rd Generation Partnership Project) und dem UMTS-Forum (UMTS: Universal Mobile Telecommunication System) unterstützt und soll bei Einzel- und Gruppenkommunikation ein breites Anwendungsszenario bieten. Das gilt gleichermaßen für Echtzeit- und Nichtechtzeit-Anwendungen. Der IMS-Standard beschreibt die Funktionen der Netzelemente und die Schnittstellen zwischen ihnen. Die einzelnen Netzelemente können dabei verschiedene Funktionen übernehmen, so stellt ein Anwendungsserver (Application Server) die Dienste bereit und Rufbearbeitungselemente (Call-Processing-Elemente) übernehmen die Signalisierung, Datenbanksysteme halten Nutzerdaten vor, Medien Server spielen Ansagen ein, und Gateways verbinden die unterschiedlichen Zugangsnetze miteinander. Das IMS ermöglicht die Durchführung von IP Multimedia Diensten, wie z.B. Sprachtelefonie mittels VoIP (Voice over IP), Videokonferenzen oder die Übertragung von Daten zwischen mehreren Nutzern innerhalb eines GSM / UMTS Mobilkommunikationssystems. Dafür muss der Nutzer allerdings im IMS registriert sein. Hierfür muss sich der sogenannte IMS Client, das heißt die dienstanfordernde Anwendung am Endgerät (Telefon) des Nutzers mittels einer SIP Nachricht (SIP - Session Initiation Protocol) im IMS anmelden. Erst danach ist der Nutzer über das IMS adressier- und erreichbar.

Das IMS baut auf andere Netze auf, die eine IP Verbindung zur Verfügung stellen können. Dazu zählen Mobilfunknetze der zweiten und dritten Generation (UMTS) sowie leitungsgebundene Netze wie das Internet.

Es ist derzeit kein Mechanismus vorgesehen, wie man den IMS Client im Endgerät eines Nutzers, der zwar bereits über eine IP Verbindung verfügt, dazu bewegt eine IMS Registrierung vorzunehmen, um über das IMS erreichbar zu sein. Es werden aber nicht alle Endgeräte standardmäßig eine IMS Registrierung unmittelbar nach dem Einschalten durchführen, diese Geräte können somit über das IMS nicht erreicht werden und die Dienste nutzen.

Eine standardmäßige Registrierung der Engeräte im IMS nach dem Einschalten ist auch nicht in allen Fällen wünschenswert, insbesondere dann, wenn nur selten IMS Services benötigt werden, weil durch die Registrierung permanent Netz-Ressourcen belegt werden.

EP 1 571 861 A1, EP 1 555 838 A2 und der Technische Report von ETSI TR 123 976 V6.1.0 (2004-06) "Universal Mobile Telecommunications System (UMTS); Push Architecture (3GPP TR 23.976) offenbaren Verfahren zur Netzwerk-initiierten IMS Registrierung eines Kommunikationsendgerätes, eines Benutzers, bei dem vom Netzwerk eine Nachricht mit bestimmten Eigenschaften über eine bereits bestehende Kommunikationsverbindung an das Endgerät übermittelt wird. Im Endgerät wird die Nachricht aufgrund ihrer Eigenschaften als Aufforderung zur IMS Registrierung erkannt und in Folge vom Endgerät eine Registrierungsnachricht an das Netzwerk gesendet, um sich beim IMS zu registrieren. Als Nachricht für die Initiierung der IMS Registrierung wird eine Kurznachricht, Short Message, verwendet.

### Offenbarung der Erfindung

Die Aufgabe der Erfindung ist es, einen Mechanismus vorzusehen, wie man den IMS Client im Endgerät eines Nutzers dazu bewegt, eine IMS Registrierung vorzunehmen, um über das IMS erreichbar zu sein ohne eine Kurznachricht verwenden zu müssen.

Diese Aufgabe wird durch die Merkmale der unabhängigen Ansprüche gelöst, auf die an dieser Stelle Bezug genommen wird.

Bevorzugte Ausgestaltungen der Erfindung sind in den abhängigen Ansprüchen angegeben; auf die an dieser Stelle Bezug genommen wird. Nicht-IMS-registrierte Geräte sind in einem Netz über das IMS nicht erreichbar, obwohl sie über eine IP oder auch eine leitungsvermittelte (circuit switched) Verbindung verfügen. Durch das erfindungsgemäße Netzwerk-initiierte Anstoßen einer IMS (SIP) Registrierungsprozedur durch den IMS Client wird die IMS Erreichbarkeit ermöglicht ohne die Ressourcen des Kommunikationsnetzes dauernd belegen zu müssen.

Die Erfindung beschreibt nun ein Verfahren zum Netzwerk-initiierten Anstoßen einer IMS Registrierung, d.h. einer SIP Registration, durch einen IMS Client in einem Mobilfunknetz oder Festnetz auf Basis de IMS (IP Multimedia Core Network Subsystem).

Zur Initiierung der IMS Registrierung wird erfindungsgemäß eine spezielle Nachricht über eine bereits bestehende Kommunikationsverbindung an das Endgerät übermittelt, welche von diesem aufgrund ihrer Beschaffenheit zur Weiterleitung an den IMS Client erkannt wird, was daraufhin erfolgt. Der IMS Client wiederum sendet nun eine SIP Register Nachricht an das IMS um sich auf herkömmlichen Weg anzumelden. Der weitere Ablauf der IMS Registrierung erfolgt nun wie bereits im IMS Standard definiert.

### Kurze Beschreibung der Zeichnungen

Figur 1 zeigt eine Übersicht der am Verfahren beteiligten Komponenten und die Anbindung des Anwendungsservers and die Kurnachrichtendienstzentrale gemäß eines ersten Ausführungsbeispiels der Erfindung.
Figur 2 zeigt einen schematischen Ablauf einer SIP Registrierung mit vorausgehender Initiierung gemäß eines zweiten Ausführungsbeispiels der Erfindung.

### Beschreibung von bevorzugten Ausführungsbeispielen der Erfindung

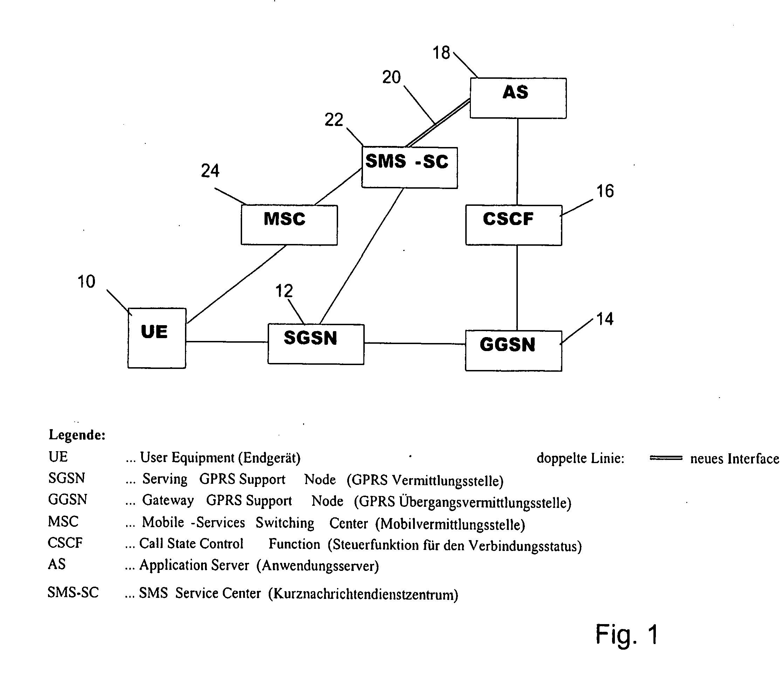

Gemäß einem ersten Ausführungsbeispiel der Erfindung nach Figur 1 kann eine Kurznachricht (Short Message) als Nachricht für die Initiierung der IMS Registrierung verwendet werden. Diese Option ist in einem Mobilfunknetz möglich. Das Mobilfunknetz wird als Zugangsnetz zum IMS Dienst und zur Übermittlung der Kurznachricht verwendet. Das Zugangsnetz kann ein nach GPRS (General Packet Radio Service) -Vorgaben arbeitendes Mobilfunknetz sein.

Das Mobilfunknetz beinhaltet eine ein Endgerät UE (User Equipment) 10 bedienende GPRS-Gateway-Vermittlungsstelle SGSN (Serving GPRS Support Node) 12, welche über eine nach dem SIP-Standard arbeitende erste Signalverbindung mit dem Endgerät 10 verbindbar ist. Weiterhin weist das Zugangsnetz eine GPRS-Übergangs-Vermittlungsstelle GGSN (Gateway GPRS Support Node) 14 auf, die über eine nach dem SIP-Standard arbeitende zweite Signalverbindung mit dem SGSN 12 verbunden ist.

Der Übergang zwischen dem IMS und dem Zugangsnetz wird durch eine Call Session Control Function 16 (CSCF) realisiert. Die CSCF 16 umfasst Steuerfunktionen für den Verbindungsstatus zwischen dem IMS (IP-Netz) und dem Zugangsnetz. Durch die SCSF wird der Benutzer mit seinem Endgerät 10 registriert und die SIP-Verbindung sowie die Dienste und Dienstmerkmale gesteuert. Dazu kommuniziert sie mit dem Endgerät 10 und einem Anwendungsserver 18.

Der Anwendungsserver 18 AS (Application Server) im IMS, welcher die IMS Registrierung eines Nutzers anstoßen möchte, sendet über eine im Rahmen der Erfindung neu eingerichtete Schnittstellenverbindung 20 eine Anforderung an die Kurznachrichtendienstzentrale 22, SMS-SC (Short Message Service - Service Center) und die Mobilvermittlung 24 (MSC), eine speziell kodierte Kurznachricht an das Endgerät 10 des Benutzers (s. Fig. 1). Die besondere Kodierung der Kurznachricht kann beispielsweise im Nachrichtentyp (Message Type), in der Nachrichtenklasse (Message Class) oder in einem anderen Parameter der Kurznachricht vorhanden sein, oder aber auch im Inhalt der Nachricht. Aufgrund dieser besonderen Kodierung der "Registrierungs"-Kurznachricht erkennt das Endgerät 10 des Nutzers, dass es sich dabei um eine Kurznachricht handelt, die an einen SIP bzw. IMS Client des Endgeräts 10 weiterzuleiten ist. Der SIP bzw. IMS Client des Endgeräts wird durch die "Registrierungs"-Kurznachricht veranlasst, eine IMS Registrierung anzustoßen, wie sie im IMS Standard definiert ist.

Weiters wäre auch möglich generell eine Anwendungsidentität (Application Identity) für Kurznachrichten einzuführen, welche es ermöglicht, im Allgemeinen Anwendungen auf dem Endgerät zu adressieren, um Daten mittels Kurznachrichten an diese zu übertragen. Dazu muss jede Applikationen eine eindeutige Identität erhalten.

Bevor eine Kurznachricht über das Mobilfunknetz an das Endgerät des Nutzers gesendet werden kann, muss die IMS Identität, die sogenannte Public User Identity, in eine Mobilfunkrufnummer MSISDN (Mobile Subscriber ISDN Number) oder eine Teilnehmeridentität IMSI (International Mobile Subscriber Identity) umgesetzt werden, die zur Adressierung für den Kurznachrichtendienst SMS (Short Message Service) notwendig ist. Dazu kann durch den Anwendungsserver oder ein Netzelement des Mobilfunknetzes (z.B. SMS-SC oder CSCF) eine externe Datenbank oder eine entsprechende Teilnehmerdatenbank HSS (Home Subscriber Server) über existierende Mechanismen abgefragt werden.

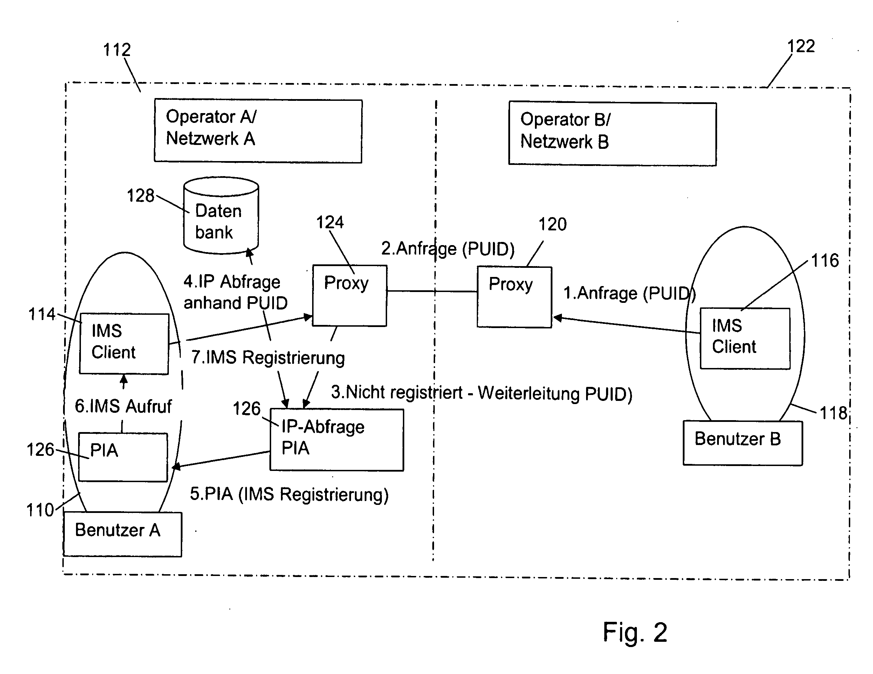

Gemäß einem zweiten Ausführungsbeispiel der Erfindung nach Figur 2 kann ein IP Datenpaket oder eine Steuernachricht als Nachricht für die Initiierung der IMS Registrierung verwendet werden.

Besteht bereits eine IP Verbindung des Endgeräts 110 eines Benutzers A mit seinem Netzwerk A 112 und ist diesem eine IP Adresse zugewiesen, so kann mittels beispielsweise eines speziellen IP Pakets ein IMS Client 114 im Endgerät 110 des Benutzers A darüber informiert werden, dass die IMS Registrierung erwünscht ist. Dieser Verbindungswunsch wird beispielweise durch einen IMS Client 116 des Endgeräts 118 eines zweiten Benutzers B geäußert. Hierzu stellt der Benutzer B eine Anfrage mit der IMS Identität (Public User ID, PUID) des Benutzers A, die in einem Proxy 120 des Netzes B 122 des Benutzers B empfangen und an einen Proxy 124 des Netzwerks A des gesuchten Nutzers A weitergeleitet wird (Schritte 1 und 2).

Nachdem festgestellt wurde, dass der Benutzer A im IMS nicht registriert ist (Schritt 3), muss zunächst die IMS Identität (PUID) in die aktuelle IP Adresse des Benutzers A umgesetzt werden. Diese Umsetzung der PUID in die IP Adresse kann im Netz des gesuchten Benutzers A erfolgen. Dazu wird mittels einer im Netz A 112 des gesuchten Benutzers A befindlichen Einheit (Entity) oder einer im Rahmen der Erfindung neu definierten "Push Invoke Application (PIA) Interfaces/Protokolls 126 eine (externe) Datenbank 128 oder die Teilnehmerdatenbank HSS (Home Subscriber Server) abgefragt. Über Public User ID (PUID) wird die IMSI und die derzeit dem Nutzer zugewiesene IP-Adresse von der Datenbank 128 erfragt (Schritt 4). Mittels des Push Invoke Application (PIA) Interfaces/Protokolls 126, also einer Schnittstelle/Protokoll zum automatischen Aufrufen von Anwendungen, wird der IMS-Client 114 des Endgeräts A 110 darüber informiert dass die IMS Registrierung erwünscht ist bzw. kann der IMS Client mittels geeignetem Framework auch der Start des IMS-Clients initiiert werden (Schritt 5).

Das Push Invoke Application Protokoll setzt auf den bekannten Protokollen TCP (Transmission Control Protocol) und/oder dem UDP (User Datagram Protocol) auf. Es enthält eine Kennung (einen Identifier) für die zu benachrichtigende Applikation, sowie auch weitere für die aufzurufende Applikation spezifische Parameter (Schritt 6). Eine auf dem PIA Protokoll aufsetzende Applikation kann nun schon der zu benachrichtigende spezifische Client (IMS Client) sein, oder aber wiederum ein generischer Client mit Schnittstellen zu unterschiedlichen Clients, beispielsweise IMS, SMS, MMS. Der IMS Client führt dann die angeforderte IMS Registrierung durch (Schritt 7).

### Liste der Bezugszeichen

- 1-7: Verfahrensschritte (Figur 2)
- 10: Endgerät
- 12: SGSN
- 14: GGSN
- 16: CSCF
- 18: Anwendungsserver
- 20: Schnittstelle
- 22: Kurznachrichtenzentrale
- 24: Mobilvermittlung
- 110: Endgerät A
- 112: Netzwerk A
- 114: IMS Client A
- 116: IMS Client B
- 118: Endgerät B
- 120: Proxy
- 122: Netzwerk B
- 124: Proxy
- 126: PIA
- 128: Datenbank

## Patentansprüche

1. Verfahren zur Netzwerk-initiierten IMS Registrierung eines Kommunikationsendgerätes (110) eines Benutzers, bei dem vom Netzwerk (112) eine Nachricht mit bestimmten Eigenschaften über eine bereits bestehende Kommunikationsverbindung an das Endgerät übermittelt wird, und im Endgerät die Nachricht aufgrund ihrer Eigenschaften als Aufforderung zur IMS Registrierung erkannt wird und in Folge vom Endgerät eine Registrierungsnachricht an das Netzwerk gesendet wird, um sich beim IMS zu registrieren, wobei das Netzwerk ein paketdatenorientiertes Netzwerk oder IP Netzwerk ist, **dadurch gekennzeichnet, dass** eine kurznachricht als Nachricht für die Initiierung der IMS Registrierung verwendet wird, wobei mittels eines Push Invoke Application, PIA Interface/Protokolls (126), also einer Schnittstelle/Protokoll zum automatischen Aufrufen von Anwendungen, der IMS-Client (114) des Endgeräts (110) darüber informiert wird, dass die IMS Registrierung erwünscht ist, wobei aufgrund einer Anwendungsidentität das Kommunikationsendgerät (110) des Benutzers erkennt, dass es sich um eine Nachricht handelt, die an einen SIP- oder IMS-Client des Kommunikationsendgeräts (110) weiterzuleiten ist.

2. Verfahren nach Anspruch 1, **dadurch gekennzeichnet, dass** das Netzwerk ein Mobilkommunikationsnetzwerk ist.

3. Verfahren nach einem der Ansprüche 1 oder 2, **dadurch gekennzeichnet, dass** wenn bereits eine IP Verbindung des Endgeräts (10; 110) mit dem Netzwerk besteht und diesem eine IP Adresse zugewiesen ist, ein IMS Client (114) des Endgeräts mittel der IP Nachricht oder Steuernachricht (126) darüber informiert wird, dass die IMS Registrierung erwünscht ist.

4. Verfahren nach einem der Ansprüche 1 bis 3, **dadurch gekennzeichnet, dass** zur Adressierung der Nachricht (126) anhand einer Abfrage einer Datenbank (128) eine Umsetzung der IMS Identität des Endgeräts (110) In eine Teilnehmeridentität, IMSI, des Benutzers und eine IP Adresse des Endgeräts durchgeführt wird.

5. System zur Durchführung eines Verfahrens zur Netzwerk-initiierten IMS Registrierung eines Kommunikationsendgeräts (110), bei dem im Netzwerk Mittel vorgesehen, um eine Nachricht (126) mit bestimmten Eigenschaften über eine bereits bestehende Kommunikationsverbindung an das Endgerät zu übermitteln, und im Endgerät (110) Mittel vorgesehen sind, um die Nachricht (126) aufgrund ihrer Eigenschaften als Aufforderung zur IMS Registrierung zu erkennen und in Folge eine Registrierungsnachricht an das Netzwerk zu senden, um sich beim IMS zu registrieren, wobei das Netzwerk ein paketdatenorientiertes Netzwerk oder IP Netzwerk ist, **dadurch gekennzeichnet, dass** die Nachricht eine kurznachricht für die Initiierung der IMS Registrierung ist, und im Netzwerk eine Schnittstelle/Protokoll zum automatischen Aufrufen von Anwendungen im Endgerät in Form eines Push Invoke Application Interface/Protokolls (126) vorgesehen ist, wobei die Nachricht eine Anwendungsidentität enthält, anhand der das Kommunikationsendgerät (110) des Benutzers erkennt, dass es sich um eine Nachricht handelt, die an einen SIP oder IMS-Client des Kommunikationsendgeräts (110) weiterzuleiten ist.

6. System nach Anspruch 5, **dadurch gekennzeichnet, dass** das Netzwerk ein Mobilkommunikationsnetzwerk ist.

7. System nach Anspruch 5, **dadurch gekennzeichnet, dass** das Netzwerk ein paketdatenorientiertes Netzwerk oder IP Netzwerk ist.

## Claims

1. Method for network-initiated IMS registration of a communications terminal (110) of a user, in which the network (112) transmits a message having specific characteristics to the terminal via an already existing communications link, and the terminal recognises the message as an IMS registration request based on its characteristics and subsequently sends a registration message from the terminal to the network to register with the IMS, wherein the network is a packet data-oriented network or IP network, **characterised in that** a short message is used as the message for initiating the IMS registration, wherein by means of a Push Invoke Application, PIA Interface/Protocol (126), that is an interface/protocol for automatic call-up of applications, the IMS client (114) of the terminal (110) is informed that the IMS registration is desired, wherein on the basis of an application identity, the communications terminal (110) of the user recognises that it is a message which is to be forwarded to an SIP client or IMS client of the communications terminal (110).

2. Method according to claim 1, **characterised in that** the network is a mobile communications network.

3. Method according to one of claims 1 or 2, **characterised in that** if an IP connection of the terminal (10; 110) with the network already exists and an IP address is assigned to it, an IMS client (114) of the terminal is informed by means of the IP message or control message (126) that IMS registration is desired.

4. Method according to one of claims 1 to 3, **characterised in that** for addressing the message (126), a conversion of the IMS identity of the terminal (110) to a subscriber identity, IMSI, of the user and an IP address of the terminal is carried out using a database (128) query.

5. System for carrying out a method for network-initiated IMS registration of a communications terminal (110), in which means are provided in the network to transmit a message (126) having specific characteristics to the terminal via an already existing communications link, and means are provided in the terminal (110) to
recognise the message (126) as an IMS registration request based on its characteristics and to subsequently send a registration message to the network to register with the IMS, wherein the network is a packet data-orientated network or IP network, **characterised in that** the message is a short message for initiating the IMS registration, and an interface/protocol for automatic call-up of applications in the terminal is provided in the network in the form of a Push Invoke Application Interface/Protocol (126), wherein the message contains an application identity, using which the communications terminal (110) of the user recognises that it is a message which is to be forwarded to an SIP client or IMS client of the communications terminal (110).

6. System according to claim 5, **characterised in that** the network is a mobile communications network.

7. System according to claim 5, **characterised in that** the network is a packet data-oriented network or IP network.

## Revendications

1. Procédé pour l'enregistrement IMS (sous-système multimédia IP), initié par réseau, d'un terminal de communication (110) d'un utilisateur, selon lequel un message avec des caractéristiques définies est transmis par le réseau (112) au terminal par l'intermédiaire d'une liaison de communication déjà existante, et dans le terminal le message est reconnu sur la base de ses caractéristiques comme une demande d'enregistrement IMS, puis un message d'enregistrement est ensuite envoyé par le terminal au réseau, pour s'enregistrer auprès de l'IMS, étant précisé que le réseau est un réseau par paquets ou un réseau IP, **caractérisé en ce qu'**un message court est utilisé comme message pour initier l'enregistrement IMS, étant précisé qu'à l'aide d'une application Push Invoke, PIA Interface/protocole (126), c'est-à-dire une interface/protocole pour l'appel automatique d'applications, le client IMS (114) du terminal (110) est informé que l'enregistrement IMS est souhaité, étant précisé que sur la base d'une identité d'utilisation, le terminal de communication (110) de l'utilisateur reconnaît qu'il s'agit d'un message qui doit être retransmis à un client SIP ou IMS du terminal de communication (110).

2. Procédé selon la revendication 1, **caractérisé en ce que** le réseau est un réseau de communication mobile.

3. Procédé selon l'une des revendications 1 ou 2, **caractérisé en ce que** lorsqu'une liaison IP entre le terminal (10 ; 110) et le réseau existe déjà et qu'une adresse IP est affectée à celui-ci, un client IMS (114) du terminal est informé à l'aide du message IP ou d'un message de commande (126) que l'enregistrement IMS est souhaité.

4. Procédé selon l'une des revendications 1 à 3, **caractérisé en ce que** pour l'adressage du message (126) à l'aide d'une interrogation d'une banque de données (128), une conversion de l'identité IMS du terminal (110) en identité d'abonné, IMSI, de l'utilisateur et en adresse IP du terminal est réalisée.

5. Système pour la mise en oeuvre d'un procédé pour l'enregistrement IMS, initié par réseau, d'un terminal de communication (110), selon lequel il est prévu dans le réseau des moyens pour transmettre par le réseau (112) un message (126) avec des caractéristiques définies au terminal par l'intermédiaire d'une liaison de communication déjà existante, et il est prévu dans le terminal (110) des moyens pour reconnaître le message (126), sur la base de ses caractéristiques, comme une demande d'enregistrement IMS et pour envoyer ensuite un message d'enregistrement au réseau afin de s'enregistrer auprès de l'IMS, étant précisé que le réseau est un réseau par paquets ou un réseau IP, **caractérisé en ce que** le message est un message court pour initier l'enregistrement IMS, et il est prévu dans le réseau une interface/protocole pour l'appel automatique d'applications dans le terminal sous la forme d'une application Push Invoke interface/protocole (126), étant précisé que le message contient une identité d'application à l'aide de laquelle le terminal de communication (110) de l'utilisateur reconnaît qu'il s'agit d'un message qui doit être retransmis à un client SIP ou IMS du terminal de communication (110).

6. Système selon la revendication 5, **caractérisé en ce que** le réseau est un réseau de communication mobile.

7. Système selon la revendication 5, **caractérisé en ce que** le réseau est un réseau par paquets ou un réseau IP.
